(19) Europäisches Patentamt
European Patent Office
Office européen des brevets

(11) Numéro de publication: 0 080 917
B1

(12) **FASCICULE DE BREVET EUROPEEN**

(45) Date de publication du fascicule du brevet: **23.01.85**

(51) Int. Cl.⁴: **A 01 N 47/06** // (A01N47/06, 43/54)

(21) Numéro de dépôt: **82402076.2**

(22) Date de dépôt: **12.11.82**

(54) **Compositions herbicides à base de dérivés d'amino-4 chloro-6 alkylthio-5 pyrimidine et de pyridate, et procédé de traitement des cultures à l'aide desdites compositions.**

(30) Priorité: **24.11.81 FR 8121941**

(43) Date de publication de la demande: **08.06.83 Bulletin 83/23**

(45) Mention de la délivrance du brevet: **23.01.85 Bulletin 85/4**

(84) Etats contractants désignés: **AT BE CH DE FR GB IT LI LU NL SE**

(56) Documents cités:
**EP - A - 0 000 681**
**EP - A - 0 024 260**
**AT - A - 326 409**

(73) Titulaire: **P C U K PRODUITS CHIMIQUES UGINE KUHLMANN, Service Propriété Industrielle Tour Manhattan, F-92087 Paris La Défense 2 Cédex 21 (FR)**

(72) Inventeur: **Boutemy, Gérard Emile Marcel, 19 Chemin des Résistants Oncy sur Ecole, F-91490 Milly la Foret (FR)**

(74) Mandataire: **Chretien, François et al, RHONE-POULENC AGROCHIMIE Service P.I.D. 14-20 Rue Pierre Baizet, F-69009 Lyon (FR)**

EP 0 080 917 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet des compositions herbicides contenant, en tant que matières actives, un dérivé d'amino-4 chloro-6 alkylthio-5 pyrimidine répondant à la formule:

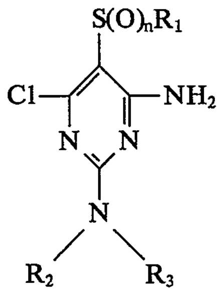

(I)

dans laquelle n est 0, 1 ou 2, $R_1$ est un groupe alkyle ayant 1 à 5 atomes de carbone, $R_2$ est un atome d'hydrogène ou un groupe alkyle ayant 1 à 5 atomes de carbone et $R_3$ est un atomes d'hydrogène ou un groupe alkyle ayant 1 à 5 atomes de carbone, et du Pyridate ou thiocarbonate de O-(chloro-6 phényl-3 pyridazinyle-4) et de S-octyle.

L'invention concerne également un procédé de destruction des mauvaises herbes dans les cultures de céréales, en particulier l'orge et le blé d'hiver, et dans les cultures de maïs mettant en œuvre lesdites compositions.

Les composés de formule (I) sont des composés herbicides connus, qui ont la propriété de détruire un grand nombre de plantes adventices monocotylédones et dicotylédones dans les cultures de blé, orge, riz et maïs (cf. demandes de brevet au Japon nos. 6335/77 et 92162/77 publiées sous les numéros 92789/78 et 27580/79 et les demandes de brevet européen publiées sous les numéros 0 000 681 et 0 024 260). Le Pyridate est également un composé herbicide connu qui, lorsqu'il est appliqué en post-levée, détruit les plantes adventices dicotylédones dans les cultures de céréales, maïs, sorgho et colza (cf. par exemple le brevet autrichien n° 326 409).

Il a en outre été proposé d'associer certains des composés de formule (I) avec des dérivés herbicides de l'urée (cf. demande de brevet européen publiée sous le numéro 0 013 636). Mais, il n'a pas été proposé jusqu'ici d'associer les composés herbicides de formule (I) au Pyridate.

Comme dérivé de formule (I) utilisable dans les compositions herbicides selon l'invention, on peut citer en particulier la diamino-2,4 chloro-6 méthylthio-5 pyrimidine (composé dénommé A par la suite), l'éthylamino-2 amino-4 chloro-6 méthylthio-5 pyrimidine (composé dénommé B par le suite) et la diamino-2,4 chloro-6 méthylsulfinyl-5 pyrimidine (composé dénommé C par le suite).

Dans les compositions selon l'invention, le rapport en poids

$$\frac{\text{composé de formule (I)}}{\text{Pyridate}}$$

va de 0,6 à 2,4.

Outre les matières actives précédemment citées, les compositions herbicides selon l'invention peuvent contenir les additifs inertes (diluants solides ou liquides, agents dispersants, agents mouillants, agents émulsifiants, tensio-actifs, etc...) habituellement utilisés en agriculture pour diluer les matières actives et faciliter leur mise en suspension aqueuse. De tels additifs inertes sont bien connus de l'homme de l'art. Comme diluants solides, on peut citer en particulier le talc, la silice, le kieselguhr, le kaolin, la craie, la terre de diatomées et l'argile. Comme diluants liquides on peut citer en particulier l'eau, les huiles minérales et des solvants organiques tels que le benzène et le xylène. Comme agents dispersants, on peut citer les lignosulfonates, en particulier les lignosulfonates de sodium, et les sels de sodium des produits de condensation d'acides naphtalènesulfoniques avec le formaldéhyde, par exemple les sels de sodium des produits de condensation de l'acide naphtalènesulfonique et du formaldéhyde et les sels de sodium des produits de condensation ternaires d'acide naphtalènesulfonique, d'acide phénolsulfonique et de formaldéhyde. Comme agents mouillants, agents émulsifiants et tensioactifs, on peut citer des composés non-ioniques tels que les esters partiels d'acides gras et de sorbitan connus sous la marque de commerce Span, les produits de condensation des esters précédents avec l'oxyde d'éthylène connus sous la marque de commerce Tween, les produits de condensation d'oxyde d'éthylène et d'oxyde de propylène connus sous la marque de commerce Pluronic et les produits de condensation de l'oxyde d'éthylène avec des alkylphénols ou avec des alcools gras comme l'alcool laurique, l'alcool oléique et l'alcool cétylique, et des composés anioniques tels que les alkylsulfonates de sodium connus sous la marque de commerce Ekazol, les alkylarylsulfonates de métaux alcalins comme le dodécylbenzènesulfonate de sodium et le dibutylnaphtalènesulfonate de sodium, et les sels alcalins des sulfates d'alcools gras.

Les compositions herbicides selon l'invention peuvent se présenter sous forme de granulés solides,

poudres pour poudrage, poudres mouillables, suspensions aqueuses, émulsions ou solutions dans un solvant organique. Elles sont présentées de préférence sous forme de poudres mouillables contenant, outre les matières actives, un diluant solide (charge), un agent dispersant et un agent mouillant.

Pour préparer les compositions selon l'invention, on mélange intimement, suivant des procédés connus en soi, les divers constituants, c'est-à-dire les deux matières actives et éventuellement les additifs inertes, les deux matières actives étant introduites dans les proportions indiquées précédemment.

Les compositions selon l'invention présentent, vis-à-vis de certaines plantes adventices dicotylédones que l'on trouve dans les cultures de céréales et de maïs (par exemple le chénopode et la morelle), un effet de synergie, c'est-à-dire que leur efficacité herbicide sur ces plantes adventices est nettement supérieure à celle que l'on pourrait attendre à partir des résultats obtenus avec le composé de formule (I) seul et avec le Pyridate seul. Un tel effet est inattendu.

Les compositions selon l'invention conviennent pour le désherbage des céréales, en particulier l'orge et le blé d'hiver, et pour le désherbage du maïs. Pour le désherbage des céréales et du maïs, les compositions selon l'invention sont appliquées sur la surface cultivée, en post-levée de la plante culture, la dose totale de matières actives appliquée étant de 1100 g/ha à 2200 g/ha, et de préférence voisine de 1500 g/ha.

Les exemples suivants illustrent l'invention sans la limiter.

## Exemple 1

### Préparation d'une composition sous forme de poudre mouillable

Deux parties en poids de polyéthoxyéther d'alcool gras (agent mouillant) et 4 parties en poids de silice (charge) sont mélangés, pendant 20 minutes, dans un mélangeur de type Moritz. Puis le produit ainsi obtenu (silice sur laquelle est absorbé l'agent mouillant) est mélangé, pendant 30 minutes, avec 32 parties en poids de composé A, 36 parties en poids de pyridate, 3 parties en poids de méthylnaphtalène sulfonate de sodium (agent dispersant) et 23 parties en poids de talc (charge) dans un mélangeur à rouleaux. Le mélange ainsi obtenu est ensuite micronisé dans un broyeur pneumatique du type »Fluid Energy« et le mélange micronisé est, après passage dans un cyclone avec séparateur à manche, homogénéisé à nouveau dans un mélangeur à rouleaux pendant 30 minutes. Toutes les opérations sont effectuées à la température ambiante.

On obtient ainsi une poudre mouillable ayant la composition suivante:

| | |
|---|---|
| Composé A | 320 g |
| Pyridate | 360 g |
| Méthylnaphtalène sulfonate de sodium | 30 g |
| Polyéthoxyéther d'alcool gras | 20 g |
| Silice | 40 g |
| Talc | 230 |
| | 1000 g |

Dans cette poudre mouillable le rapport en poids

$$\frac{\text{composé A}}{\text{pyridate}} \text{ est égal à } \frac{8}{9}.$$

## Exemple 2

Les matières actives employées sont soit le composé de formule (I) seul, soit le Pyridate seul, soit des mélanges contenant le composé de formule (I) et le Pyridate dans le rapport pondéral:

$$\frac{\text{Composé de formule (I)}}{\text{Pyridate}} = 0,6$$

$$\frac{\text{Composé de formule (I)}}{\text{Pyridate}} = 1,2$$

ou

$$\frac{\text{Composé de formule (I)}}{\text{Pyridate}} = 2,4$$

Les matières actives sont formulées sous forme de poudres mouillables ayant la composition indiquée ci-après:

Pour le composé de formule (I):

Poudre mouillable contenant:

| | |
|---|---|
| Composé de formule (I) | 80% en poids |
| Agent mouillant (Pluronic L 92) | 1,5% en poids |
| Agent dispersant (lignosulfonate de sodium) | 4% en poids |

Charge:

| | |
|---|---|
| Silice précipitée | 0,5% en poids |
| Talc | 14% en poids |

Pour le Pyridate:

Poudre mouillable contenant 45% de matière active connue sous la dénomination »Lentagran«.

Pour les mélanges de matières actives contenant le composé de formule (I) et le Pyridate:

Poudres mouillables obtenues en mélangeant les quantités appropriées des deux poudres mouillables précédentes.

Les poudres mouillables sont diluées dans l'eau avant emploi et les bouillies aqueuses ainsi obtenues sont pulvérisées, à raison de 1000 l/ha, sur les plantes testées âgées de 15 jours. Les dilutions sont calculées de façon à apporter les doses de matière active indiquées dans le tableau I. Les plantes testées sont d'une part le blé et le maïs (plantes cultures), d'autre part le chénopode et la morelle (plantes adventices). Les essais correspondant aux diverses plantes et aux divers types de traitement ont été répétés cinq fois et les résultats moyens ont été enregistrés pour chaque plante et chaque type de traitement.

Les résultats moyens abtenus sont rassemblés dans le tableau I ci -après, dans lequel l'efficacité herbicide vis-à-vis des plantes adventices et la phytotoxicité vis-à-vis des plantes cultures sont experimées par une note de 0 à 10, 0 correspondant à une efficacité herbicide ou à une phytotoxicité nulle et 10 correspondant à une destruction totale de la plante adventice ou de la plante culture.

Dans le tableau I figurent également, dans la colonne efficacité herbicide calculée, les valeurs que l'on obtiendrait pour les compositions contenant simultanément le composé de formule (I) et le Pyridate dans le cas d'une simple additivité des effets des composants. Les valeurs calculées sont abtenues à l'aide de Colby:

$$E_{XY} = E_X + E_Y - \frac{E_X \cdot E_Y}{10}$$

dans laquelle $E_X$ est l'efficacité herbicide du produit X appliqué à la dose m g/ha, $E_Y$ est l'efficacité herbicide du produit Y appliqué à la dose n g/ha et $E_{XY}$ est l'efficacité herbicide additive à laquelle on peut s'attendre lorsqu'on applique simultanément m g/ha du produit X et n g/ha du produit Y.

La comparaison des valeurs calculées et des valeurs observées montre que les compositions selon l'invention contenant un composé de formule (I) choisi parmi les composés A, B et C et du Pyridate présentent un effet de synergie. L'efficacité herbicide observée pour ces compositions est supérieure à l'efficacité herbicide additive $E_{XY}$.

Tableau I

| Matière active | Dose de matière active apportée en g/ha | Phytotoxicité vis-à-vis de la plante culture | | Efficacité herbicide vis-à-vis de la plante adventice | | | |
|---|---|---|---|---|---|---|---|
| | | | | Chenopode | | Morelle | |
| | | Blé | maïs | Observée | Calculée | Observée | Calculée |
| Composé A | 600 | 0 | 0 | 5,4 | | 3 | |
| idem | 1200 | 1,5 | 0 | 10 | | 6 | |
| Composé B | 600 | 0,5 | 0 | 7 | | 4 | |
| Composé C | 600 | 0 | 0 | 3 | | 2 | |
| idem | 1200 | 0,8 | 0 | 6 | | 4 | |
| Pyridate | 500 | 0 | 0 | 3 | | 2 | |
| idem | 1000 | 0,5 | 0,3 | 7 | | 5,5 | |
| Composé A + Pyridate | 600 + 500 | 0 | 0 | 8 | 6,7 | 6 | 4,4 |
| idem | 600 + 1000 | 0,4 | 0 | | | 8,5 | 6,8 |
| idem | 1200 + 1000 | 1,5 | 0 | | | 10 | 8,2 |
| Composé B + Pyridate | 600 + 500 | 0,7 | 0 | 9 | 7,9 | 6,5 | 5,2 |
| idem | 600 + 1000 | 1,2 | 0 | | | 8 | 7,3 |
| Composé C + Pyridate | 600 + 500 | 0 | 0 | 6 | 5,1 | 5 | 3,6 |
| idem | 600 + 1000 | 0,3 | 0 | | | 7 | 6,4 |
| idem | 1200 + 500 | 0,5 | 0 | 8 | 7,2 | 7 | 5,2 |
| idem | 1200 + 1000 | 1 | 0,5 | | | 8,5 | 7,3 |

## Exemple 3

### Traitement des cultures de blé d'hiver en post-levée

La poudre mouillable préparée à l'exemple 1 est diluée dans l'eau et la suspension aqueuse ainsi obtenue est pulvérisée en plein champ, à raison de 400 l/ha, sur des cultures de blé d'hiver au stade tallage. La dilution est calculée de façon à apporter la dose de matière active indiquée dans le tableau II ci-après.

Les résultats, relevés 50 jours après l'application du produit, sont rassemblés dans le tableau II. Dans ce tableau l'efficacité herbicide vis-à-vis des plantes adventices et la phytotoxicité vis-à-vis de la plante culture (blé d'hiver) sont exprimées selon l'échelle de notation indiquée à l'exemple 2.

Tableau II

Traitement des cultures de blé d'hiver en post-levée
Matière active appliquée: Composé A + Pyridate
Dose de matière active appliquée: 800 g/ha composé A + 900 g/ha Pyridate

| Phytotoxicité vis-à-vis du blé d'hiver | Efficacité herbicide vis-à-vis des plantes adventices | | | | |
|---|---|---|---|---|---|
| | gaillet | ray-grass | véronique | vulpin | paturin |
| 0,4 (valeur moyenne sur cinq essais) | 9 | 6,5 | 6,5 | 5 | 2 |

## Exemple 4

### Traitement des cultures de maïs en post-levée

La poudre mouillable préparée à l'exemple 1 est diluée dans l'eau et la suspension aqueuse ainsi obtenue est pulvérisée en plein champ, à raison de 400 l/ha, sur des cultures de maïs au stade 3 feuilles. La dilution est calculée de façon à apporter la dose de matière active indiquée dans le tableau III ci-après.

Les résultats, relevés 50 jours après l'application du produit, sont rassemblés dans le tableau III. Dans ce tableau l'efficacité herbicide vis-à-vis des plantes adventices et la phytotoxicité vis-à-vis de la plante culture sont exprimées selon l'échelle de notation indiquée à l'exemple 2.

Tableau III

Traitement des cultures de maïs en post-levée
Matière active appliquée: Composé A + Pyridate
Dose de matière active appliquée: 800 g/ha composé A + 900 g/ha Pyridate

| Phytotoxicité vis-à-vis du maïs | Efficacité herbicide vis-à-vis des plantes adventices | |
|---|---|---|
| | Chénopode | renouée persicaire |
| 1,4 (valeur moyenne sur 2 essais) | 10 (valeur moyenne sur 2 essais | 8,4 (valeur moyenne sur 2 essais) |

A titre comparatif, un traitement en post-levée de ces mêmes cultures de mais à l'aide de 2000 g/ha d'atrazine s'est révélé peu efficace vis-à-vis du chénopode (efficacité herbicide 2,5).

**Revendications**

1. Compositions herbicides caractérisées en ce qu'elles contiennent sinultanément, comme matières actives, un dérivé d'amino-4 chloro-6 alkylthio-5 pyrimidine de formule:

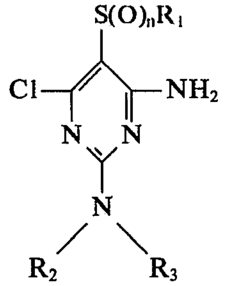

(I)

dans laquelle n est 0, 1 ou 2, $R_1$ est un groupe alkyle ayant 1 à 5 atomes de carbone, $R_2$ est un atome d'hydrogène ou un groupe alkyle ayant 1 à 5 atomes de carbone et $R_3$ est un atome d'hydrogène ou un groupe alkyle ayant 1 à 5 atomes de carbone, et du Pyridate, le rapport en poids

$$\frac{\text{Composé de formule (I)}}{\text{Pyridate}}$$

dans les compositions étant de 0,6 à 2,4.

2. Composition herbicides selon la revendication 1, caractérisées en ce que le composé de formule (I) est choisi parmi la diamino-2,4 chloro-6 méthylthio-5 pyrimidine, l'éthylamino-2 amino-4 chloro-6 méthylthio-5 pyrimidine et la diamino-2,4 chloro-6 méthylsulfinyl-5 pyrimidine.

3. Compositions herbicides selon l'une quelconque des revendications 1 et 2, caractérisées en ce qu'elles se présentent sous forme de poudres mouillables contenant, outre les matières actives, un diluant solide, un agent dispersant, et un agent mouillant.

4. Procédé de désherbage des céréales et du maïs, caractérisé en ce qu'on applique sur la surface cultivée, en post-levée de la plante culture, une composition telle que définie dans chacune des revendications 1 à 3, la dose totale de matières actives appliquée étant de 1100 g/ha à 2200 g/ha.

5. Procédé selon la revendication 4, caractérisé en ce que la composition appliquée est sous forme d'une bouillie aqueuse.

**Patentansprüche**

1. Herbizide Zusammensetzungen, dadurch gekennzeichnet, daß sie gleichzeitig als Wirkstoffe ein 4-Amino-6-chlor-5-alkylthiopyrimidin-Derivat der Formel

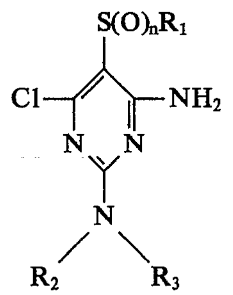

(I)

in welcher n für 0, 1 oder 2, $R_1$ für eine Alkylgruppe mit 1 bis 5 Kohlenstoffatomen, $R_2$ für ein Wasserstoffatom oder eine Alkylgruppe mit 1 bis 5 Kohlenstoffatomen und $R_3$ für ein Wasserstoffatom oder eine Alkylgruppe mit 1 bis 5 Kohlenstoffatomen steht, und Pyridat enthalten, wobei das Gewichtsverhältnis

$$\frac{\text{Verbindung der Formel (I)}}{\text{Pyridat}}$$

in den Zusammensetzungen 0,6 bis 2,4 beträgt.

2. Herbizide Zusammensetzungen nach Anspruch 1, dadurch gekennzeichnet, daß die Verbindung der Formel (I) ausgewählt ist aus 2,4-Diamino-6-chlor-5-methylthiopyrimidin, 2-Äthylamino-4-amino-6-chlor-5-methylthiopyrimidin und 2,4-Diamino-6-chlor-5-methylsulfinylpyrimidin.

3. Herbizide Zusammensetzungen nach irgendeinem der Ansprüche 1 und 2, dadurch gekennzeichnet, daß sie in Form von benetzbaren Pulvern vorliegen, die außer den Wirkstoffen ein festes Verdünnungsmittel, ein Dispergiermittel und ein Netzmittel enthalten.

4. Verfahren zur Bekämpfung von Unkräutern in Getreide und Mais, dadurch gekennzeichnet, daß man auf die Kulturfläche nach dem Auflaufen der Kulturpflanze eine in einem der Ansprüche 1 bis 3 definierte Zusammensetzung aufbringt, wobei die aufgebrachte Gesamtdosis der Wirkstoffe 1100 g/ha bis 2200 g/ha beträgt.

5. Verfahren nach Anspruch 4, dadurch gekennzeichnet, daß die aufgebrachte Zusammensetzung in Form einer wässerigen Aufschlämmung vorliegt.

**Claims**

1. Herbicidal compositions characterized in that they simultaneously contain, as active ingredient, a derivative of 4-amino 6-chloro 5-alkylthiopyrimidine of the formula:

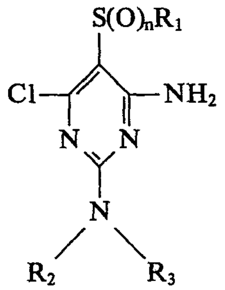

(I)

in which n is 0, 1 or 2, $R_1$ is alkyl with 1 to 5 carbon atoms, $R_2$ is hydrogen or alkyl with 1 to 5 carbon atoms and $R_3$ is hydrogen or alkyl with 1 to 5 carbon atoms, and Pyridate, the weight ratio

$$\frac{\text{compound of formula (I)}}{\text{Pyridate}}$$

in the compositions being 0.6 to 2.4.

2. Herbicidal compositions according to claim 1 characterized in that the compound of formula (I) is selected from 2,4-diamino 6-chloro 5-methylthio pyrimidine, 2-ethylamino 4-amino 6-chloro 5-methylthio pyrimidine and 2,4-diamino 6-chloro 5-methylsulfinyl pyrimidine.

3. Herbicidal compositions according to claim 1 or 2 in the form of wettable powders containing, in addition to the active ingredients, a solid diluent, a dispersing agent and a wetting agent.

4. A method for controlling weeds in cereal and maize crops characterized in applying a composition as defined in each of 1 to 3 on the cultivated area during the postemergence period of the crop plant, the total dose of the active ingredients applied being 1,100 g/ha to 2,200 g/ha.

5. A method according to claim 4 characterized in that the applied composition is in the form of an aqueous slurry.